# EUROPÄISCHE PATENTSCHRIFT

(11) **EP 3 543 734 B1**
(45) Veröffentlichungstag und Bekanntmachung des Hinweises auf die Patenterteilung: **24.11.2021**
(21) Anmeldenummer: 19158888.8
(22) Anmeldetag: 22.02.2019
(51) Int. Cl.: G01S 7/486, G01S 7/497

(54) **LICHTLAUFZEITSENSOR**
LIGHT RUNTIME SENSOR
CAPTEUR DE TEMPS DE PROPAGATION DE LA LUMIÈRE

(30) Priorität: 22.03.2018 DE 102018106793
(43) Veröffentlichungstag der Anmeldung: 25.09.2019
(73) Patentinhaber: SICK AG, 79183 Waldkirch (DE)
(72) Erfinder: Zwölfer, Ulrich, 79183 Waldkirch (DE); Waslowski, Kai, 79183 Waldkirch (DE); Blümcke, Thomas, 79183 Waldkirch (DE)

(56) Entgegenhaltungen:
- EP-A1- 2 924 460
- EP-A1- 3 091 272
- EP-A2- 2 211 205
- DE-B3-102017 101 501
- US-A1- 2014 218 715

## Beschreibung

Die vorliegende Erfindung betrifft einen Lichtlaufzeitsensor nach dem Oberbegriff von Anspruch 1.

Messeinrichtungen bzw. Sensoren für eine Distanzmessung lassen sich in die Gruppen der indirekten Lichtlaufzeitmessung und der direkten Laufzeitmessung einteilen. Indirekte Laufzeitmesssysteme sind aufgrund ihrer einfacheren Integration, beispielsweise Systeme mit Phasenmessung und der guten Skalierungsmöglichkeit heute in Systemen erhältlich, die vorwiegend in Consumer-Produkten Anwendung finden. Aufgrund der Natur der Phasenmessung sind diese Systeme hinsichtlich z. B. Mehrdeutigkeit, Kantentreffer und gegenseitige Beeinflussung sehr fehleranfällig. Dies ist bei Systemen mit direkter Lichtlaufzeitmessung grundsätzlich anders. Es wird die eindeutige Zeit zwischen einem ausgesendeten Laserpuls und dem empfangenen reflektierten Lichtpuls vermessen.

Direkte Lichtlaufzeitsysteme für die Sicherheitstechnik sind sehr aufwändig. Diese Systeme weisen typischerweise getrennte Empfänger, nämlich Avalanche Photodioden, Zeitmesseinheiten und Auswerteeinheiten auf.

Durch den Einsatz einer Avalanche Photodiode als Empfänger und einem Transimpedanzverstärker steht nachteilig ein begrenzter Dynamikbereich für die direkte Messwerterfassung zur Verfügung. Weiter werden eine Hochspannungserzeugung und teure Spezialbauteile benötigt. Für die Spezialbauteile gibt es meist keinen zweiten Lieferanten. Weiter ist für die Spezialbauteile ein hoher Platzbedarf notwendig.

Die EP2924460A1 offenbart ein Sensorsystem zur Erkennung mindestens eines Objekts in einer Übertragungsstrecke. Das Sensorsystem umfasst mindestens einen Sender und mindestens einen Empfänger. Der Sender wird mit einem Speisesignal angesteuert, um ein Sendesignal in die Übertragungsstrecke hinein zu senden, das nach Durchgang und Beeinflussung durch ein Objekt als modifiziertes Sendesignal zumindest zu einem Empfänger gelangt. Der Empfänger empfängt es als modifiziertes Empfangssignal und bildet ein Empfängerausgangssignal mit einem modifizierten Empfängerausgangssignalanteil. Eine Signal-Erzeugungs-Einheit mit einem Wavelet-Generator erzeugt wenigstens ein Wavelet-Signal als Basissignal, das in einer Verarbeitungseinheit zu einem das Empfängerausgangssignal umfassenden Verarbeitungszwischensignal weiterverarbeitet wird. Die Verarbeitungseinheit separiert einen modifizierten Empfängerausgangssignalanteil und erzeugt daraus eine Regelwert-Matrix mit Regelwert-Signalen, aus denen mittels einer Rücktransformations-Einheit ein Speisesignal oder ein Kompensationsspeisesignal erzeugt wird. Die Rückführung des Kompensationsspeisesignals erfolgt in das Sensorsystem. Die Rücktransformations-Einheit regelt das Sensorsystem stabil aus. Der Empfänger umfasst eine Avalanche-Diode deren Empfängerausgangssignal durch Modulation der Sperrspannung mit einer vorbestimmten Modulationsfrequenz auf eine vorbestimmte Zwischenfrequenz gewandelt wird, oder eine Drift-Field-Diode, in der ein Element der Verarbeitungseinheit integriert ist.

Die DE102017101501 B3 offenbart einen optoelektronischen Sensor zur Bestimmung der Entfernung eines Objekts mit einem Lichtsender zum Aussenden eines Lichtpulses, mit einem SPAD-Lichtempfänger mit einem Messempfangselement und einem Referenzempfangselement sowie mit einer Auswertungseinheit, die dafür ausgebildet ist, aus den Empfangssignalen des Messempfangselements und des Referenzempfangselements eine Lichtlaufzeit zwischen Aussenden des Lichtpulses und Empfangen des remittierten Lichtpulses und daraus den Abstand des Objekts zu bestimmen. Dabei ist die Auswertungseinheit weiterhin dafür ausgebildet, mit einem elektrischen Startsignal eine Referenzzeitmessung und eine Lichtlaufzeitmessung zu beginnen, die Referenzzeitmessung mit Empfang des Referenzpulses auf dem Referenzempfangselement und die Lichtlaufzeitmessung mit Empfang des remittierten Lichtpulses auf dem Messempfangselement zu beenden und die Lichtlaufzeit als Differenz der Ergebnisse der Lichtlaufzeitmessung und der Referenzzeitmessung zu bestimmen.

Die EP2211205A2 offenbart ein Verfahren, wonach Sendelichtstrahlen von einem Sender ausgesendet, Empfangslichtstrahlen von einem als Lawinenphotodiode ausgebildeten Empfänger empfangen und in einer Auswerteeinheit ein Objekterfassungssignal erzeugt wird. Die Vorspannung der Fotodiode zur Durchführung der Objekterkennung wird in Abhängigkeit von der berechneten Durchbruchspannung ermittelt. Die Umgebungstemperatur der Lawinenphotodiode wird durch einen Temperatursensor bestimmt.

Die US20140218715A1 offenbart eine Struktur eines optischen Weges zur Laserentfernungsmessung, welche einen Hauptkörper und eine Licht emittierende Einheit umfasst, die in dem Hauptkörper zusammengebaut sind. Der Hauptkörper hat einen Sendekanal, einen Empfangskanal und einen Kalibrierungskanal. Die Leuchteinheit ist im Sendekanal montiert. Die Lichtemissionseinheit emittiert einen externen optischen Strahl und einen internen optischen Strahl. Der externe optische Strahl wird durch den Sendekanal emittiert. Der interne optische Strahl wird über den Kalibrierungskanal zum Empfangskanal gesendet. Ein eingeschlossener Winkel ist zwischen dem externen optischen Strahl und dem internen optischen Strahl definiert. Im Empfangskanal ist ein Empfänger montiert. Bei dieser Anordnung interferieren der externe optische Strahl und der interne optische Strahl nicht miteinander.

Die EP 3 091 272 A1 offenbart ein Lichtgitter nach dem Lichtlaufzeitprinzip mit min-destens einem Lichtsender, der Lichtsignale in einen Messbereich aussendet und mit mindestens einem Lichtempfänger, welcher die aus dem Messbereich zurückgeworfenen Lichtsignale aufnimmt und in Form von elektrischen Empfangssignalen einer Steuer- und Auswerteeinheit zuführt, die unter Berücksichtigung der Lichtgeschwindigkeitaus der Zeit zwischen Aussendung und Empfang des Lichtsignals ein für den Abstand von Objekten zum Lichtgitter repräsentatives Abstandssignal ermittelt, wobei der Lichtempfänger mindestens eine Einzelphotonenlawinendiode aufweist.

Eine Aufgabe der Erfindung besteht darin, einen Messkern für einen Lichtlaufzeitsensor sicher im Sinne von Maschinensicherheit auszubilden.

Die Aufgabe wird gemäß Anspruch 1 gelöst durch einen Lichtlaufzeitsensor mit einem Messpfad zur Messung einer Lichtlaufzeit, wobei der Messpfad mindestens ein Empfangselement aus einer Matrix aus Einzelphotonenlawinendioden, mindestens einen mit der Matrix verbundenen Messwerterzeuger und mindestens einem mit dem Messwerterzeuger verbundenen Messwertsammler aufweist, wobei mindestens eine Steuer- und Auswerteeinheit vorgesehen ist, wobei zur Testung und/oder Funktionsprüfung des Messpfades (2) mindestens ein Testsender (9) vorgesehen ist, wobei die Einzelphotonenlawinendioden (5) mit Gleichlicht verschiedener Intensitäten durch den Testsender (9) beaufschlagt werden, wobei durch den Testsender (9) eine Anzahl von Einzelphotonenlawinendioden (5) aktiviert wird, wobei durch einen Vergleich einer Häufigkeit einer Aktivierung von Einzelphotonenlawinendioden (5) durch den Testsender (9) mit einem Sollwert einer Häufigkeit eine Testung des Messpfades (2) durchgeführt wird, wobei Messwerte des Messwerterzeugers (6) in einem Histogramm gesammelt und ackumuliert werden, wobei durch Differenzbetrachtung des Abbildes im Messwertsammler (7) mit unterschiedlichen Beleuchtungsstärken des Testsenders (9) ein erwarteter Verlauf eines Pileup-Effekts nachgewiesen wird.

Die Erzeugung einer Messdistanz erfolgt mindestens durch den Messpfad mit der Matrix aus Einzelphotonenlawinendioden, dem verbundenen Messwerterzeuger, dem Messwertsammler sowie der Steuer- und Auswerteeinheit.

Die Matrix aus Einzelphotonenlawinendioden realisiert die direkte Wandlung von empfangenen Photonen in digitale Signale. Hier kann auch von einem ,Photonen to Digital Converter' kurz PDC gesprochen werden. Besonders zu erwähnen ist an dieser Lösung, dass mit einer gewissen Wahrscheinlichkeit, nämlich der ,Photonen Detection Probability, kurz PDP von einem Photon bis theoretisch unendlich Photonen ein Schaltsignal der Einzelphotonenlawinendioden im sogenannten Geigermode generiert wird und damit eine hervorragende Dynamikkompression vorliegt.

Einzelphotonenlawinendioden werden auch synonym als ,Single Photon Avalanche Diode' kurz SPAD bezeichnet. Andere gängige Bezeichnungen sind Silicon Photomultiplier' (SiPM), Geigermode Avalanche Photon Diode' oder ,Single Photon Counting Diode'. Einzelphotonenlawinendioden sind in Standard CMOS-Technologie realisierbare photoempfindliche Detektoren, die ähnlich wie Avalanche Photodioden einfallende Photonen in Strompulse konvertieren. Im Gegensatz zu Avalanche Photodioden werden Einzelphotonenlawinendioden jedoch über einer Durchbruchsspannung betrieben. Hierbei wird die Lawinenphotodiode oberhalb der Durchbruchspannung vorgespannt, so dass bereits ein einziger, durch ein einzelnes Photon freigesetzter Ladungsträger eine nicht mehr kontrollierte Lawine auslösen kann, die dann aufgrund der hohen Feldstärke sämtliche verfügbaren Ladungsträger rekrutiert. Danach kommt die Lawine zum Erliegen (passive quenching) und steht für eine gewisse Totzeit nicht mehr zur Detektion zur Verfügung. Alternativ ist auch bekannt, die Lawine von außen zu erkennen und zu löschen (active quenching). Aufgrund der hohen Sensitivität, nämlich einem Verstärkungsfaktor von größer 10⁶ können bereits geringste Empfangsleistungen bis hin zu Einzelphotonen detektiert werden.

Ein SPAD zählt somit wie ein Geigerzähler Einzelereignisse. SPADs sind nicht nur hochempfindlich mit Verstärkungsfaktoren bis zu 10⁸, sondern auch vergleichsweise kostengünstig in Standard CMOS-Prozessen integrierbar. Zudem lassen sie sich kompakt auf einer Leiterkarte aufbauen. Eine Besonderheit ist die Tatsache, dass auch ein minimales Störereignis, wie ein Fremdlichtphoton oder Dunkelrauschen, das gleiche maximale Empfangssignal erzeugt wie ein Nutzlichtsignal. Um diese Auswirkungen zu begrenzen, werden beispielsweise mehrere SPADs gemeinsam ausgewertet oder mehrfach ausgewertet.

Zur genauen Lichtlaufzeitbestimmung muss nicht nur der Empfangszeitpunkt, sondern auch der Startzeitpunkt sehr genau bekannt sein.

Die Steuer- und Auswertungseinheit ist dafür ausgebildet, eine Vielzahl von Lichtlaufzeitmessungen mit einer Vielzahl von Messempfangselementen oder Gruppen von Messempfangselementen durchzuführen und die derart ermittelten Lichtlaufzeiten gemeinsam auszuwerten, um den Abstand des Objekts zu bestimmen. Somit erfolgt eine statistische Auswertung über die verschiedenen Messempfangselemente beispielsweise durch Aufsummieren beziehungsweise Kumulieren aller Lichtlaufzeitmessungen in einem Histogramm mit anschließender Auswertung des Histogramms. Da einzelne Einzelphotonenlawinendioden im Geiger-Modus durch ein Zufalls- oder Dunkelrauschereignis auslösen können, kann es vorteilhaft sein, mehrere Einzelphotonenlawinendioden zu einer Gruppe zusammenzufassen und gemeinsam eine Lichtlaufzeitmessung durchführen zu lassen.

Der Messwerterzeuger sind ein oder mehrere TDCs (Time-to-Digital Converter), die zwischen dem Start, also der Emission eines Laserpulses und dem Empfang eines Photons eine möglichst genaue Zeit vermessen und diese an den Messwertsammler weiterreichen. Typischerweise entsprechen 30 ps einer Distanz von 4,5 mm. Time-to-Digital Converter sind bewährte Bauteile, um die Zeitmessungen durchzuführen und praktisch als Stoppuhren arbeiten. Ein elektrischer beziehungsweise optischer Referenzpuls als Startsignal startet die TDCs und der remittierte Lichtpuls stoppt diese. Die TDCs können einem Lichtempfangselement, einer Gruppe von Lichtempfangselementen oder variabel zugeordnet sein. Vorzugsweise sind sie direkt bei den Pixeln oder Lichtempfangselementen oder zumindest auf demselben Chip implementiert.

Aufgrund statistischer Eigenschaften der SPAD, nämlich der ,Photon Detection Probability' und der ,Dark Count Rate', sowie unkorreliertem Fremdlicht bzw. Störlicht führt nicht jeder Messwert zu einem gültigen Messwert. Jedoch lassen sich gleichwohl durch das ,Aufsammeln' zahlreicher, beispielsweise 1000 Messwerte bzw. Ereignisse anhand einer Statistik eine gültige Messdistanz ermitteln und an die Applikation übergeben. So werden die Anzahl der Ereignisse in einem diskretisierten Entfernungslinearspeicher aufgezeichnet.

Die Steuer- und Auswertungseinheit ist bevorzugt dafür ausgebildet, die Lichtlaufzeitmessung zu wiederholen und die derart ermittelten Lichtlaufzeiten gemeinsam auszuwerten, um den Abstand des Objekts zu bestimmen. Dadurch ergibt sich eine größere statistische Basis und damit verbesserte Messgenauigkeit zusätzlich oder alternativ zu einer Mehrfachmessung durch eine Vielzahl von Messempfangselementen.

Bei dem Lichtlaufzeitsensor handelt es sich um einen Sicherheitssensor. Ein Sicherheitssensor soll einen möglichst hohen Sicherheits-Integritätslevel (SIL) gemäß IEC 61508/IEC 61511 aufweisen. Sicherheit ist gemäß vorliegender Erfindung Sicherheit im Sinne von Maschinensicherheit. Beispielsweise regelt die Norm EN/IEC 61496 die Anforderungen an einen sicheren Sensor bzw. eine sichere berührungslos wirkende Schutzeinrichtung (BWS) zur Absicherung von Gefahrenbereichen. Maschinensicherheit ist in der Norm EN 13849 geregelt. Die Sicherheit wird beispielsweise durch einen zweikanaligen oder zweikanalig diversitären Aufbau der Steuer- und Auswerteeinheit zur Fehleraufdeckung und zur Funktionsprüfung gewährleistet. Der abstandsmessende Sensor bzw. Distanzsensor gemäß vorliegender Erfindung ist beispielsweise eigensicher ausgebildet und erkennt interne Fehler. Bei Entdeckung eines Fehlers wird beispielsweise ein Fehlersignal generiert. Weiter verfügt der Lichtlaufzeitsensor beziehungsweise Distanzsensor über eine Sensortestung. Der vorliegende Lichtlaufzeitsensor weist eine Selbstüberwachung durch interne Referenzpfade auf.

Die Steuer- und Auswerteeinheit erkennt Schutzfeldverletzungen und kann ein sicherheitsgerichtetes Abschaltsignal ausgeben, um eine gefahrbringende Bewegung einer Maschine oder eines Fahrzeugs oder eines Teils einer Maschine zu stoppen bzw. die Maschine, das Teil der Maschine oder das Fahrzeug abzubremsen. Dies kann zum Beispiel über sichere Schaltsignale zum Beispiel OSSD-Signale (Output Safety Switching Device-Signale) oder sichere Distanzdaten, Abstandsdaten beziehungsweise sichere Ortsdaten des Eingriffsereignisses realisiert werden.

Die Schaltungsblöcke und sicherheitskritischen Hauptfunktionen lassen sich wie folgt überprüfen.

Da der Lichtlaufzeitsensor sowohl in dunkler als auch in möglichst heller Umgebung sicher betrieben werden soll, wird gefordert, dass die SPADs über die ,Dark Count Rate' hinaus im Messwertsammler im dunklen Umfeld signifikante Informationen der SPAD-Funktion nachweisen können. Dies wird durch die Beaufschlagung mit Gleichlicht verschiedener Intensität durch den Testsender gewährleistet. Dies führt zu einem charakteristischen Abbild im Messwertsammler und damit erfolgt der Nachweis der SPAD Elementfunktion. Durch Differenzbetrachtung des Abbildes im Messwertsammler mit unterschiedlichen Beleuchtungsstärken des Testsenders kann ein erwarteter Verlauf des Pileup-Effekts nachgewiesen werden. Der Pileup-Effekt bezeichnet die Anhäufung der Zahl geschalteter SPADs, die durch eine Erholzeit direkt nicht mehr für eine Messung herangezogen werden können. Der Pileup-Effekt bezeichnet quasi das Abbild des 'Verbrauches' schaltender SPADs. Die Testung erfolgt dabei beispielsweise zyklisch in bestimmten Abständen.

Die Erzeugung der TDC-Werte stellt das Herzstück der Zeitmessung dar und ist damit für die örtliche Distanzmessung von Objekten verantwortlich. Es ist zu gewährleisten, dass der Messwerterzeuger in der empfindlichsten Auflösung (Least Signifikant Bit) und über den Gesamtmessbereich korrekte Zeitmesswerte liefert. Damit der beziehungsweise die Messwerterzeuger oder TDCs dies erfüllen können, werden geeignete Kalibrierungsintervalle eingeführt, die es ermöglichen die Abweichungen zwischen Istwert zum Sollwert zu ermitteln. Damit kann sichergestellt werden, dass der TDC in jedem Fall einen korrekten Messwert liefert und die Messdistanz eindeutig und fehlerfrei ermittelbar ist. Die Funktion und Präzision kann über eine Referenzmessung und Auswertung des Messwertsammlers diagnostiziert werden.

Im Messwertsammler werden sämtliche sicherheitsrelevanten Informationen aus dem Empfangselement beziehungsweise der Empfangselemente, also der Matrix von Einzelphotonenlawinendioden und dem Messwerterzeuger zusammengeführt und damit zur Auswertung an die Steuer- und Auswerteeinheit beziehungsweise Messwertverarbeitungseinheit weitergereicht, analysiert und ausgewertet. Somit sind sämtliche die Messdistanz ermittelten Funktionsblöcke überwachbar, auf Fehler auswertbar und diagnostizierbar.

Gemäß der Erfindung wird durch das Licht des Testsenders eine Anzahl von Einzelphotonenlawinendioden aktiviert und aufgrund eines Vergleichs der Anzahl aktivierter Einzelphotonenlawinendioden mit einem Sollwert ist eine Testung des Messpfades durchführbar.

In der Erfindung ist der Testsender ausgebildet, Gleichlicht verschiedener Intensitäten auszusenden, wobei der Testsender die Matrix aus Einzelphotonenlawinendioden beleuchtet.

In der Erfindung ist durch einen Vergleich einer Häufigkeit einer Aktivierung von Einzelphotonenlawinendioden durch den Testsender mit einem Sollwert einer Häufigkeit eine Testung des Messpfades durchführbar.

In einem Histogramm werden die Messwerte der TDCs gesammelt und akkumuliert. Beispielsweise etwa 1000 Messwerte. Das Histogramm ist damit die in einem Diagramm komprimierte Darstellung aller Messwerte. Somit kann die Auswertung des Histogramms einerseits die Funktion der SPADs und andererseits die korrekte Kalibration und Funktion der TDCs nachweisen.

In Weiterbildung der Erfindung sind mindestens der Messpfad zur Messung der Lichtlaufzeit, die Matrix aus Einzelphotonenlawinendioden, der Messwerterzeuger und der Messwertsammler in einer gemeinsamen anwendungsspezifischen integrierten Schaltung (ASIC) angeordnet.

Eine anwendungsspezifische integrierte Schaltung (englisch Application-Specific Integrated Circuit, ASIC, auch Custom Chip) ist eine elektronische Schaltung, die als integrierter Schaltkreis realisiert wird. Die Funktion eines ASIC' ist in der Regel damit nicht mehr veränderbar, die Herstellungskosten sind im Vergleich zu einer diskreten Lösung geringer, jedoch fallen hohe Einmalkosten an.

Rein digitale ASICs integrieren eine große Zahl von Logikfunktionen, die sonst aus diversen Standardbausteinen wie Prozessor, Logikfamilien oder ähnlichen Bausteinen zusammengestellt werden müssten. Mixed-Signal-ASIC bestehen aus digitalen und analogen Funktionseinheiten.

In Weiterbildung der Erfindung ist eine Referenzmatrix aus Einzelphotonenlawinendioden angeordnet.

Die Steuer- und Auswertungseinheit ist bevorzugt dafür ausgebildet, die Referenzlaufzeitmessung auf Basis der Referenzmatrix aus Einzelphotonenlawinendioden und die Lichtlaufzeitmessung zu wiederholen und die derart ermittelten Lichtlaufzeiten gemeinsam auszuwerten, um den Abstand des Objekts zu bestimmen. Dadurch ergibt sich eine größere statistische Basis und damit verbesserte Messgenauigkeit zusätzlich oder alternativ zu einer Mehrfachmessung durch eine Vielzahl von Messempfangselementen.

In Weiterbildung der Erfindung sind Mittel zur Erzeugung eines elektrischen Referenzsignals angeordnet.

Zu der Kalibration der Messwerterzeuger bzw. der TDCs liegt vorzugsweise ein zeitlich hochstabiles elektrisches Referenzsignal zugrunde, beispielsweise ein Taktsignal oder DLL-Signal. Es wird im Histogramm damit eine Entfernung simuliert, welche im Messwert der einerseits gegen einen bekannten Erwartungswert verglichen wird und andererseits bei allen Zeitmesseinheiten (TDCs) deckungsgleich liegen muss. Abweichungen dazu werden in zu definierenden Grenzen in der Diagnose eines Safety-Planes dann als Fehler gewertet.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen Lichtlaufzeitsensor;
- Figur 2: einen optisch mechanischen Aufbau eines Lichtlaufzeitsensors;
- Figur 3: eine Häufigkeitsverteilung aufgrund des Pileup-Effektes;
- Figur 4: ein Referenzsignal.

In den nachfolgenden Figuren sind identische Teile mit identischen Bezugszeichen versehen.

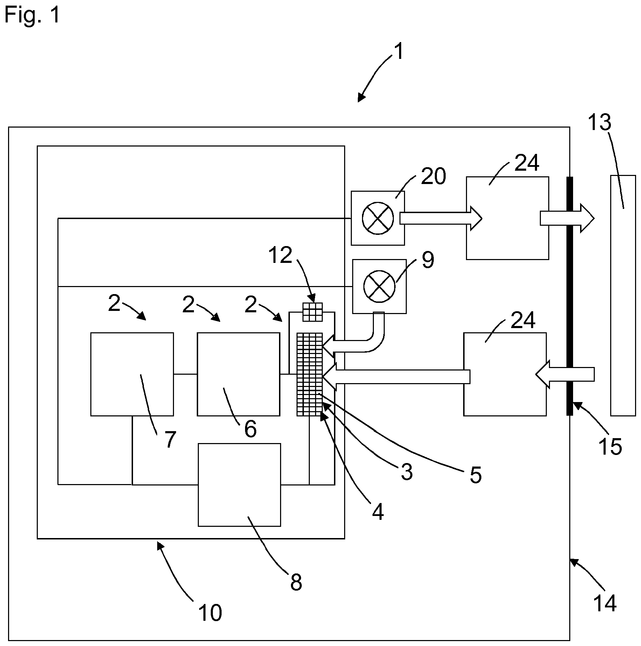

Figur 1 zeigt einen Lichtlaufzeitsensor 1 mit einem Messpfad 2 zur Messung einer Lichtlaufzeit, wobei der Messpfad 2 mindestens ein Empfangselement 3 aus einer Matrix 4 aus Einzelphotonenlawinendioden 5, mindestens einen mit der Matrix 4 verbundenen Messwerterzeuger 6 und mindestens einen mit dem Messwerterzeuger 6 verbundenen Messwertsammler 7 aufweist, wobei mindestens eine Steuer- und Auswerteeinheit 8 vorgesehen ist, wobei zur Testung und/oder zur Funktionsprüfung des Messpfades 2 Fremdlicht und/oder mindestens ein Testsender 9 vorgesehen ist.

Der Testsender 9 ist ausgebildet, Licht verschiedener Intensitäten auszusenden und die Matrix 4 aus Einzelphotonenlawinendioden 4 zu beleuchten.

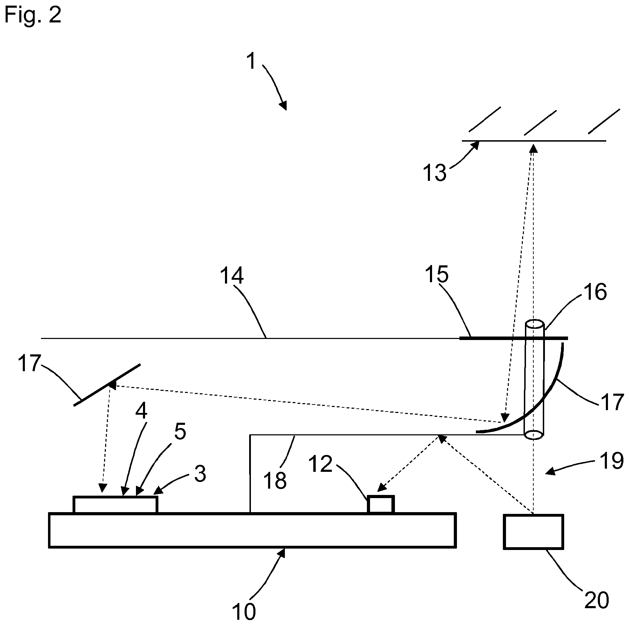

Figur 2 zeigt den optisch mechanischen Aufbau ebenfalls eines Lichtlaufzeitsensors 1, wobei die optischen Pfade detaillierter dargestellt sind. Gemäß Figur 2 ist zusätzlich zu

Figur 1 ein Senderrohr 16 zur Abschirmung des Sendelichts, Spiegel 17 zur Umlenkung des empfangenen Lichts und eine optische Abdeckung 18 zur Abschirmung des Referenzkanals 19 dargestellt.

Weiter ist in Figur 1 und Figur 2 eine Frontabdeckung 14 und eine Frontscheibe 15 dargestellt. Figur 1 zeigt zusätzlich noch Optiken 24 jeweils für den Sendepfad und den Empfangspfad.

Die nachfolgende Beschreibung bezieht sich auf Figur 1 und zur Ergänzung wird Figur 2 herangezogen.

Die Erzeugung einer Messdistanz erfolgt mindestens durch den Messpfad 2 mit der Matrix 4 aus Einzelphotonenlawinendioden 5, dem verbundenen Messwerterzeuger 6 dem Messwertsammler 7 sowie der Steuer- und Auswerteeinheit 8.

Die Matrix 4 aus Einzelphotonenlawinendioden 5 realisiert die direkte Wandlung von empfangenen Photonen in digitale Signale.

Die Steuer- und Auswertungseinheit 8 ist dafür ausgebildet, eine Vielzahl von Lichtlaufzeitmessungen mit einer Vielzahl Einzelphotonenlawinendioden 5 oder Gruppen von Einzelphotonenlawinendioden 5 durchzuführen und die derart ermittelten Lichtlaufzeiten gemeinsam auszuwerten, um den Abstand des Objekts 13 zu bestimmen. Somit erfolgt eine statistische Auswertung über die verschiedenen Einzelphotonenlawinendioden 5 beispielsweise durch Aufsummieren beziehungsweise Kumulieren aller Lichtlaufzeitmessungen in einem Histogramm mit anschließender Auswertung des Histogramms.

Der Messwerterzeuger 6 ist ein oder mehrere TDCs (Time-to-Digital Converter), die zwischen dem Start, also der Emission eines Laserpulses durch die Lichtquelle 20 beispielsweise eine Laserlichtquelle und dem Empfang eines Photons eine möglichst genaue Zeit vermisst und diese an den Messwertsammler 7 weiterreicht. Die TDCs können einem Lichtempfangselement 3, einer Gruppe von Lichtempfangselementen 3 oder variabel zugeordnet sein. Vorzugsweise sind sie direkt bei den Pixeln oder Lichtempfangselementen 3 oder zumindest auf demselben Chip implementiert.

Aufgrund statistischer Eigenschaften der Einzelphotonenlawinendioden SPAD, nämlich der 'Photon Detection Probability' und der ,Dark Count Rate', sowie unkorreliertem Fremdlicht bzw. Störlicht führt nicht jeder Messwert zu einem gültigen Messwert. Jedoch lässt sich gleichwohl durch das 'Aufsammeln zahlreicher, beispielsweise 1000 Messwerte beziehungsweise Ereignisse anhand einer Statistik eine gültige Messdistanz ermitteln und an die Applikation übergeben. So werden die Anzahl der Ereignisse in einem diskretisierten Entfernungslinearspeicher aufgezeichnet.

Die Steuer- und Auswertungseinheit 8 ist bevorzugt dafür ausgebildet, die Lichtlaufzeitmessung zu wiederholen und die derart ermittelten Lichtlaufzeiten gemeinsam auszuwerten, um den Abstand des Objekts zu bestimmen. Dadurch ergibt sich eine größere statistische Basis und damit verbesserte Messgenauigkeit zusätzlich oder alternativ zu einer Mehrfachmessung durch eine Vielzahl von Einzelphotonenlawinendioden.

Bei dem Lichtlaufzeitsensor 1 handelt es sich um einen Sicherheitssensor. Die Sicherheit wird beispielsweise durch einen zweikanaligen oder zweikanalig diversitären Aufbau der Steuer- und Auswerteeinheit 8 zur Fehleraufdeckung und zur Funktionsprüfung gewährleistet. Der Lichtlaufzeitsensor 1, bzw. abstandsmessende Sensor bzw. Distanzsensor gemäß vorliegender Erfindung ist beispielsweise eigensicher ausgebildet und erkennt interne Fehler. Bei Entdeckung eines Fehlers wird beispielsweise ein Fehlersignal generiert. Weiter verfügt der Lichtlaufzeitsensor 1 bzw. Distanzsensor über eine Sensortestung. Der vorliegende Lichtlaufzeitsensor 1 weist eine Selbstüberwachung auf durch interne Referenzpfade. Die Diagnosefähigkeit ist aber anhand der Signalverarbeitung und der Datenpfade auch komplett von außen möglich.

Aus den Histogrammdaten können Schutzfeldverletzungen erkannt werden und dann in einer auch extern signalverarbeitenden Einheit ein sicherheitsgerichtetes Abschaltsignal generiert werden, um eine gefahrbringende Bewegung einer Maschine oder eines Fahrzeugs oder eines Teils einer Maschine zu stoppen oder die Maschine, das Teil der Maschine oder das Fahrzeug abzubremsen. Dies kann zum Beispiel über sichere Schaltsignale wie OSSD-Signale (Output Safety Switching Device-Signale) oder sichere Distanzdaten, Abstandsdaten bzw. sichere Ortsdaten des Eingriffsereignisses realisiert werden.

Die Schaltungsblöcke und sicherheitskritischen Hauptfunktionen lassen sich wie folgt überprüfen.

Da der Lichtlaufzeitsensor 1 sowohl in dunkler als auch in möglichst heller Umgebung sicher betrieben werden soll, wird gefordert, dass die SPADs über die ,Dark Count Rate' hinaus im Messwertsammler im dunklen Umfeld signifikante Informationen der SPAD-Funktion nachweisen können.

Die Erzeugung der TDC-Werte stellt das Herzstück der Zeitmessung dar und ist damit für die örtliche Distanzmessung von Objekten verantwortlich. Es ist zu gewährleisten, dass der Messwerterzeuger 6 in der empfindlichsten Auflösung (Least Significant Bit) und über den Gesamtmessbereich korrekte Zeitmesswerte liefert. Damit der oder die Messwerterzeuger oder TDCs dies erfüllen können, werden geeignete Kalibrierungsintervalle eingeführt, die es ermöglichen die Abweichungen zwischen Istwert zum Sollwert zu ermitteln.

Im Messwertsammler 7 werden sämtliche sicherheitsrelevanten Informationen aus dem Empfangselement 3 oder der Empfangselemente 3, also der Matrix 4 von Einzelphotonenlawinendioden 5 und dem Messwerterzeuger 6 zusammengeführt und damit zur Auswertung an die Steuer- und Auswerteeinheit 8 oder Messwertverarbeitungseinheit weitergereicht und analysiert und ausgewertet. Somit sind sämtliche die Messdistanz ermittelten Funktionsblöcke überwachbar und auf Fehler auswertbar und diagnostizierbar.

Gemäß Figur 1 sind mindestens der Messpfad 2 zur Messung der Lichtlaufzeit, die Matrix 4 aus Einzelphotonenlawinendioden 5, der Messwerterzeuger 6 und der Messwertsammler 7 in einer gemeinsamen anwendungsspezifischen integrierten Schaltung (ASIC 10) angeordnet.

Gemäß Figur 1 ist eine Referenzmatrix 12 aus Einzelphotonenlawinendioden 5 angeordnet.

Die Steuer- und Auswertungseinheit 8 ist bevorzugt dafür ausgebildet, die Referenzlaufzeitmessung auf Basis der Referenzmatrix 12 aus Einzelphotonenlawinendioden 5 und die Lichtlaufzeitmessung zu wiederholen und die derart ermittelten Lichtlaufzeiten gemeinsam auszuwerten, um den Abstand des Objekts 13 zu bestimmen. Dadurch ergibt sich eine größere statistische Basis und damit verbesserte Messgenauigkeit zusätzlich oder alternativ zu einer Mehrfachmessung durch eine Vielzahl von Einzelphotonenlawinendioden 5.

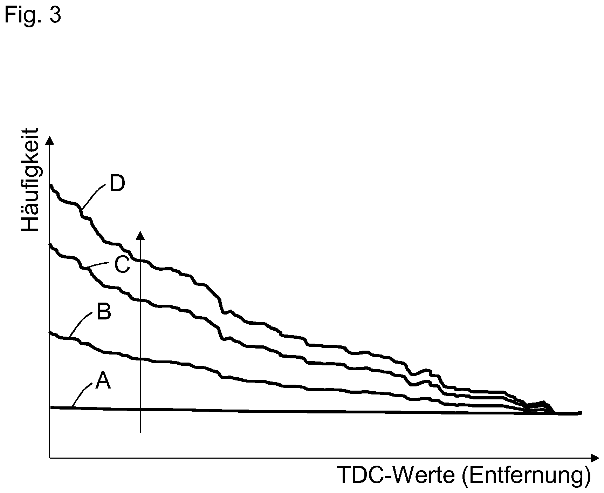

Figur 3 zeigt die Häufigkeit von geschalteten Einzelphotonenlawinendioden 5 bzw. SPADs durch die Beaufschlagung mit Gleichlicht in verschiedener Intensität durch den Testsender 9. Dies führt zu einem charakteristischen Abbild im Messwertsammler 7. Damit erfolgt der Nachweis der SPAD Elementfunktion. Durch Differenzbetrachtung des Abbildes im Messwertsammler 7 mit unterschiedlichen Beleuchtungsstärken des Testsenders 9 kann ein erwarteter Verlauf des Pileup-Effekts nachgewiesen werden. Der Pileup-Effekt bezeichnet die Anhäufung der Zahl geschalteter SPADs die durch eine Erholzeit direkt nicht mehr für eine Messung herangezogen werden können. Der Pileup-Effekt bezeichnet quasi das Abbild des 'Verbrauches' schaltender SPADs. Gemäß Figur 3 sind vier Häufigkeiten von geschalteten SPADs dargestellt. Der Graph A zeigt die Häufigkeit ohne Gleichlicht und ohne Fremdlicht. Der Graph B zeigt die Häufigkeit bei Gleichlicht und ohne Fremdlicht. Der Graph C zeigt die Häufigkeit ohne Gleichlicht und mit Fremdlicht. Der Graph D zeigt die Häufigkeit mit Gleichlicht und Fremdlicht. Die Testung erfolgt dabei beispielsweise zyklisch in bestimmten Abständen. Die Häufigkeit beziehungsweise der 'Verbrauch' schaltender SPADs nimmt gemäß Figur 3 von Graph A bis Graph D stetig zu.

Gemäß Figur 3 wird durch das Licht des Testsenders 9 eine Anzahl von Einzelphotonenlawinendioden 5 aktiviert und aufgrund eines Vergleichs der Anzahl aktivierter Einzelphotonenlawinendioden 5 mit einem Sollwert ist eine Testung des Messpfades 2 durchführbar.

Gemäß Figur 3 ist durch einen Vergleich einer Häufigkeit einer Aktivierung von Einzelphotonenlawinendioden 5 durch den Testsender 9 mit einem Sollwert einer Häufigkeit, eine Testung des Messpfades 2 durchführbar.

In einem Histogramm werden die Messwerte der TDCs gesammelt und akkumuliert. Beispielsweise circa 1000 Messwerte. Das Histogramm ist damit die in einem Diagramm komprimierte Darstellung aller Messwerte. Somit kann die Auswertung des Histogramms einerseits die Funktion der SPADs und andererseits die korrekte Kalibration und Funktion der TDCs nachweisen.

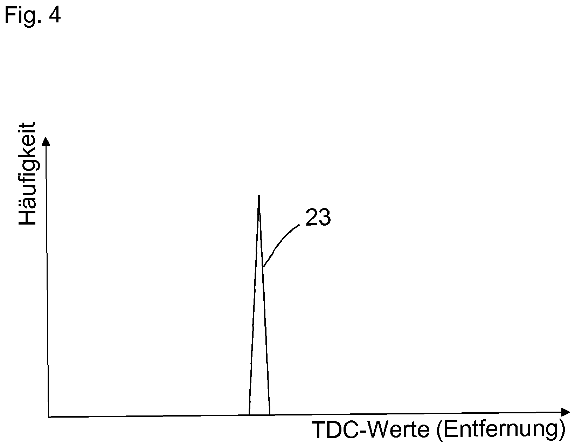

Figur 4 zeigt ein elektrisches Referenzsignal 23. Zu der Kalibration der Messwerterzeuger 6 bzw. der TDCs liegt vorzugsweise ein zeitlich hochstabiles elektrisches Referenzsignal 23 zugrunde, beispielsweise ein Taktsignal oder ein DLL-Signal. Es wird im Histogramm damit eine Entfernung simuliert, welche im Messwert der einerseits gegen einen bekannten Erwartungswert verglichen wird und andererseits bei allen Zeitmesseinheiten (TDCs) deckungsgleich liegen muss. Abweichungen dazu werden in zu definierenden Grenzen in der Diagnose eines Safety-Planes dann als Fehler gewertet.

### Bezugszeichen:

- 1: Lichtlaufzeitsensor
- 2: Messpfad
- 3: Empfangselement
- 4: Matrix aus Einzelphotonenlawinendioden
- 5: Einzelphotonenlawinendioden
- 6: Messwerterzeuger
- 7: Messwertsammler
- 8: Steuer- und Auswerteeinheit
- 9: Testsender
- 10: ASIC
- 12: Referenzmatrix aus Einzelphotonenlawinendioden
- 13: Objekt
- 14: Frontabdeckung
- 15: Frontscheibe
- 16: Senderrohr
- 17: Spiegel
- 18: optische Abdeckung
- 19: Referenzkanal
- 20: Lichtquelle
- 23: Referenzsignal
- 24: Optik
- A, B, C, D: Häufigkeiten

## Patentansprüche

1. Lichtlaufzeitsensor (1) mit einem Messpfad (2) zur Messung einer Lichtlaufzeit, wobei der Messpfad (2) mindestens ein Empfangselement (3) aus einer Matrix (4) aus Einzelphotonenlawinendioden (5), mindestens einen mit der Matrix (4) verbundenen Messwerterzeuger (6) und mindestens einen mit dem Messwerterzeuger (6) verbundenen Messwertsammler (7) aufweist, wobei mindestens eine Steuer- und Auswerteeinheit (8) vorgesehen ist, wobei zur Testung und/oder Funktionsprüfung des Messpfades (2) mindestens ein Testsender (9) vorgesehen ist, wobei die Einzelphotonenlawinendioden (5) mit Gleichlicht verschiedener Intensitäten durch den Testsender (9) beaufschlagt werden, wobei durch den Testsender (9) eine Anzahl von Einzelphotonenlawinendioden (5) aktiviert wird, wobei durch einen Vergleich einer Häufigkeit einer Aktivierung von Einzelphotonenlawinendioden (5) durch den Testsender (9) mit einem Sollwert einer Häufigkeit eine Testung des Messpfades (2) durchgeführt wird, wobei Messwerte des Messwerterzeugers (6) in einem Histogramm gesammelt und akkumuliert werden, wobei durch Differenzbetrachtung des Abbildes im Messwertsammler (7) mit unterschiedlichen Beleuchtungsstärken des Testsenders (9) ein erwarteter Verlauf eines Pileup-Effekts nachgewiesen wird.

2. Lichtlaufzeitsensor (1) nach mindestens einem der vorhergehenden Ansprüche, **dadurch gekennzeichnet, dass** mindestens der Messpfad (2) zur Messung der Lichtlaufzeit, die Matrix (4) aus Einzelphotonenlawinendioden (5), der Messwerterzeuger (6) und der Messwertsammler (7) in einem gemeinsamen ASIC (10) angeordnet sind.

3. Sensor nach mindestens einem der vorhergehenden Ansprüche, **dadurch gekennzeichnet, dass** eine Referenzmatrix (12) aus Einzelphotonenlawinendioden (5) angeordnet ist.

4. Sensor nach mindestens einem der vorhergehenden Ansprüche, **dadurch gekennzeichnet, dass** Mittel zur Erzeugung eines elektrischen Referenzsignals (23) angeordnet sind.

## Claims

1. A time of flight sensor (1) having a measurement path (2) for measuring a time of flight, wherein the measurement path (2) has at least one reception element (3) composed of a matrix (4) of single-photon avalanche diodes (5), at least one measured value generator (6) connected to the matrix (4), and at least one measured value collector (7) connected to the measured value generator (6); wherein at least one control and evaluation unit (8) is provided; wherein at least one control and evaluation unit (8) is provided; and wherein at least one test transmitter (9) is provided for the testing and/or functional check of the measurement path (2), with the single-photon avalanche diodes (5) being acted on by D.C. light of different intensities by the test transmitter (9), with a plurality of single-photon avalanche diodes (5) being activated by the test transmitter, with a testing of the measurement path (2) being carried out by a comparison of a frequency of activation of single-photon avalanche diodes (5) by the test transmitter (9) with a desired value of a frequency, with measured values of the measured value generator (6) being collected and accumulated in a histogram, and with an expected course of a pile-up effect being detected by a differential view of the image in the measured value collector (7) with different intensities of illumination of the test transmitter (9).

2. A time of flight sensor (1) in accordance with at least one of the preceding claims, **characterized in that** at least the measurement path (2) for measuring the time of flight, the matrix (4) composed of single-photon avalanche diodes (5), the measured value generator (6), and the measured value collector (7) are arranged in a common ASIC (10).

3. A sensor in accordance with at least one of the preceding claims, **characterized in that** a reference matrix (12) composed of single-photon avalanche diodes (5) is arranged.

4. A sensor in accordance with at least one of the preceding claims, **characterized in that** means for generating an electric reference signal (23) are arranged.

## Revendications

1. Capteur de temps de vol de lumière (1), ayant un trajet de mesure (2) pour mesurer un temps de vol de la lumière, le trajet de mesure (2) présentant au moins un élément de réception (3) constitué d'une matrice (4) de diodes à avalanche à photon unique (5), au moins un générateur de valeurs de mesure (6) connecté à la matrice (4) et au moins un collecteur de valeurs de mesure (7) connecté au générateur de valeurs de mesure (6), dans lequel il est prévu au moins une unité de commande et d'évaluation (8), il est prévu au moins un émetteur de test (9) pour tester et/ou contrôler le fonctionnement du trajet de mesure (2), les diodes à avalanche à photon unique (5) sont exposées à une lumière constante de différentes intensités par l'émetteur de test (9), un certain nombre de diodes à avalanche à photon unique (5) sont activées par l'émetteur de test (9), un test du trajet de mesure (2) est effectué en comparant une fréquence d'activation des diodes à avalanche à photon unique (5) par l'émetteur de test (9) avec une valeur de consigne d'une fréquence, les valeurs de mesure du générateur de valeurs de mesure (6) sont collectées et accumulées dans un histogramme, et une évolution attendue d'un effet d'empilement (dit "pile-up") est décelée par une observation différentielle de l'image dans le collecteur de valeurs de mesure (7) avec différentes intensités d'éclairage de l'émetteur de test (9).

2. Capteur de temps de vol de lumière (1) selon la revendication précédente, **caractérisé en ce que** au moins le trajet de mesure (2) pour mesurer le temps de vol de la lumière, la matrice (4) constituée de diodes à avalanche à photon unique (5), le générateur de valeurs de mesure (6) et le collecteur de valeurs de mesure (7) sont disposés dans un circuit ASIC (10) commun.

3. Capteur selon l'une au moins des revendications précédentes, **caractérisé en ce qu'**il est prévu une matrice de référence (12) constituée de diodes à avalanche à photon unique (5).

4. Capteur selon l'une au moins des revendications précédentes, **caractérisé en ce qu'**il est prévu des moyens de génération d'un signal électrique de référence (23).
